# EUROPÄISCHE PATENTSCHRIFT

(11) **EP 2 036 006 B1**
(45) Veröffentlichungstag und Bekanntmachung des Hinweises auf die Patenterteilung: **15.12.2010**
(21) Anmeldenummer: 07725557.8
(22) Anmeldetag: 25.05.2007
(51) Int. Cl.: G06K 19/077

(54) **CHIPKARTE UND VERFAHREN ZUR HERSTELLUNG EINER CHIPKARTE**
SMARTCARD AND METHOD FOR PRODUCTION OF A SMARTCARD
CARTE À PUCE ET PROCÉDÉ DE FABRICATION D'UNE CARTE À PUCE

(30) Priorität: 30.06.2006 DE 102006030819
(43) Veröffentlichungstag der Anmeldung: 18.03.2009
(73) Patentinhaber: Smartrac IP B.V., 1077 XX Amsterdam (NL)
(72) Erfinder: RIETZLER, Manfred, 87616 Marktoberdorf (DE); CASTANO, Philippe, 10110 Bangkok (TH)
(74) Vertreter: Tappe, Hartmut
(86) Internationale Anmeldenummer: PCT/EP2007/004661
(87) Internationale Veröffentlichungsnummer: WO 2008/000325

(56) Entgegenhaltungen:
- WO-A-2007/025934
- DE-C1- 10 113 476
- US-A1- 2001 011 012

## Beschreibung

Die vorliegende Erfindung betrifft eine Chipkarte, insbesondere eine Wertkarte, Identifikationskarte oder dergleichen sowie ein Verfahren zu deren Herstellung mit zumindest einer Transpondereinheit, die zumindest einen Chip und zumindest eine Antenne aufweist, die mit dem Chip verbunden ist, wobei die Antenne aus einem Leiter ausgebildet ist, der auf einem Antennensubstrat angeordnet ist und zumindest zwei voneinander beabstandeten Windungen aufweist, wobei die Erstreckung der Antenne auf eine Teilfläche des Antennengubstrats beschränkt ist und die Antenne eine Mehrzahl von Leitersträngen aufweist, die zumindest teilweise achsenparallel zu einer Symmetrieachse der Chipkarte angeordnet sind.

Das technische Gebiet der Erfindung betrifft Chipkarten mit induktiv gekoppelten Transpondern, wie sie in sogenannten RFID-Systemen zum Einsatz kommen. Passive, induktiv gekoppelte Transpondereinheiten sind im Wesentlichen aus einem Chip als Datenträger und einer großflächigen Spule, welche als Antenne dient, zusammengesetzt. In Verbindung mit einer Chipkarte, Wertkarte oder dergleichen ist die Transpondereinheit zwischen unterschiedlichen Laminatschichten der Karte aufgenommen und kann berührungslos von einer Sende- bzw. Leseeinheit oder unmittelbar über Außenkontaktflächen auf der Oberfläche der Karte ausgelesen werden.

Zum berührungslosen Auslesen des Chips wird bei passiven Transpondern die dafür notwendige Energie von der Sende- bzw. Leseeinheit zur Verfügung gestellt. Von einer Antennenspule einer Leseeinheit wird dazu ein starkes, hochfrequentes, elektromagnetisches Feld erzeugt, welches eine Antennenspule einer Transpondereinheit durchdringt, die sich in einiger Entfernung zur Leseeinheit befindet. Durch Induktion wird an der Antennenspule der Transpondereinheit eine Spannung erzeugt, welche in einem Chip gleichgerichtet wird und der Energieversorgung des Chips dient. Mit der Antennenspule der Transpondereinheit ist ein Kondensator parallel geschaltet, welcher zusammen mit der Spuleninduktivität einen Parallelschwingkreis in Resonanzfrequenz bildet, die auf eine Sendefrequenz der Leseeinheit abgestimmt ist. Die Datenübertragung von der Transpondereinheit zur Leseeinheit erfolgt durch die sogenannte Lastmodulation, bei der ein Lastwiderstand an der Antenne der Transpondereinheit ein- und ausgeschaltet wird und somit eine Spannungsänderung an der Antenne der Leseeinheit hervorgerufen wird. Da diese Spannungsänderung sehr klein ist und nur mit großem technischen Aufwand zu detektieren ist, wird der Lastwiderstand mit hoher Taktfrequenz ein- und ausgeschaltet, so dass eine relativ einfach erfassbare Hilfsträgerfrequenz, abweichend von der Sendefrequenz der Leseeinheit, entsteht. Dieses Verfahren wird insbesondere auch in einem Hochfrequenzbereich um 13,56 MHz angewendet.

Um die Ansprechempfindlichkeit eines solchen RFID-Systems zu optimieren, sollte die Resonanzfrequenz der Transpondereinheit relativ exakt mit der Sendefrequenz der Leseeinheit übereinstimmen. Die Ausbildung der gewünschten Resonanzfrequenz kann durch zusätzliche Abgleichkondensatoren auf dem Chip erfolgen. Im Hochfrequenzbereich ist die benötigte Kapazität aber meist so klein, dass die Eingangskapazität des Chips zusammen mit der parasitären Kapazität der Transponderspule bzw. der Antenne hierfür ausreicht.

Weiterhin ist es notwendig, die Eingangsimpedanz der Antenne der Eingangsimpedanz des Chips anzupassen. Diese Impedanzanpassung zwischen Chip und Antenne kann auch mittels diskreter Bauelemente durchgeführt werden, was bei Chipkarten der vorgenannten Art jedoch aus Gründen des Produktionsaufwandes vermieden werden sollte. Durch ein geschicktes Design der Antenne ist es möglich, die Eingangsimpedanz der Antenne so auszubilden, dass sie konjugiert komplex zur Eingangsimpedanz des Chips ist. Die Leistungsanpassung zwischen Chip und Antenne wird dadurch alleine durch die Antenne erreicht.

Zur Ausbildung einer derartigen Transponderantenne sind aus dem Stand der Technik galvanische Verfahren und Verlegetechniken bekannt. Insbesondere die DE 195 25 933 C5 und die EP 0 753 180 B1 beschreiben ein Verfahren zur Ausbildung einer Antennensule aus einem Draht durch Verlegen des Drahtes auf einem Trägersubstrat einer Chipkarte der vorgenannten Art. Bei diesem Verfahren werden die Antennendrahtwindungen in Form einer Spule auf dem Trägersubstrat verlegt und mit diesem verbunden. Die geometrische Ausgestaltung einer Spule und somit das Antennendesign kann bei der Anwendung dieses Verfahrens ohne großen Aufwand leicht verändert werden.

Bei Chipkarten mit einer Hochprägung, wie z. B. Kreditkarten, ist die Fläche für die Verlegung einer Antennenspule durch die Hochprägung und einen möglichen Außenkontaktbereich eines Chips stark limitiert, so dass in Randbereichen der Chipkarte nur sehr wenig Platz für die Antenne verbleibt. Der Windungsabstand der Antennenspule muss daher in diesen Bereichen vergleichsweise klein gehalten werden. Auch können in gleichartigen Chipkarten einer Baureihe Chips unterschiedlicher Hersteller zum Einsatz kommen, welche über voneinander verschiedene Eingangsimpedanzen und Kapazitäten verfügen. Wenn über eine geometrische Ausbildung der Antenne innerhalb eines limitierten Flächenbereiches der Chipkarte eine Leistungsanpassung der Antenne mit dem Chip und eine Abstimmung der Resonanzfrequenz der Transpondereinheit erreicht werden soll, ist eine eigens dafür ausgebildete geometrische Form der Antennenspule notwendig.

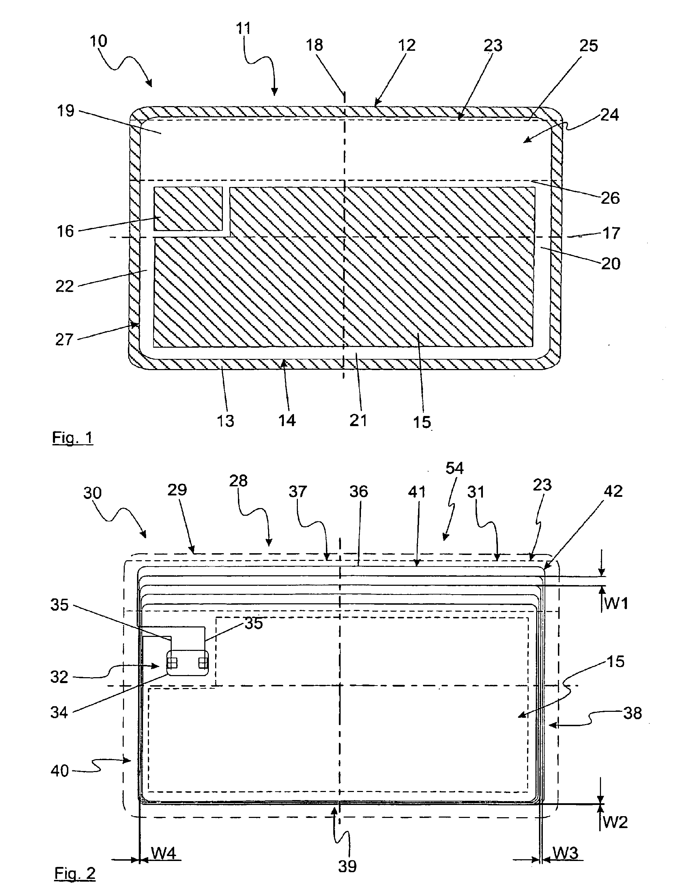

DE-C-101 134 76 offenbart eine Chipkarte mit Chip und Antennenspule. Die Antenne liegt auf einer Teilfläche des Antennensubstrats (siehe Figur 2). Die Antennenspule hat mehrere Windungen. Die Leiter der Antenne verlaufen Abschnittsweise parallel zu Symmetrieachsen der Karte. Der Leiterstrang 10a und der gegenüberliegende Leiterstrang verlaufen asymmetrisch bezüglich der Symmetrieachse der Karte. Der Abstand der Windungen ist im Bereich 10a größer ist als in den anderen Bereichen. Die Resonanzfrequenz der Spule entspricht üblicherweise der Frequenz der vorgesehenen Leseeinheit.

US-A-2001/0011012 offenbart auch eine Chipkarte auf der die Windungen des Antennenleiters beiderseits der Symmetrieachse unterschiedlich angeordnet sind.

WO-A-2007/025934 gilt gemäß Artikel 54 (3) und (4) EPÜ 1973 als Stand der Technik, der bei der Prüfung auf Neuheit zu berücksichtigen ist.

Es offenbart eine Chipkarte mit einem Chip 4 und einer Antenne 1, die mit dem Chip verbunden ist. Die Antenne ist aus einem Leiter gebildet, der auf einem Substrat 3 angeordnet ist. Die Antenne bedeckt nicht das ganze Substrat und hat mehrere von einander beabstandete Windungen 1, die teilweise achsenparallel zu einer Symmetrieachse der Karte angeordnet sind. In einer Anpassungszone B weichen die Leitungsstränge der Windungen von der achsensymmetrischen Anordnung ab, wodurch die Antenne an den Chip angepaßt wird. Die Leiterteile der Windungen werden in der Anpassungszone jeweils mit individuellem Abstand zu benachbarten Leiterteilen verlegt.

Der vorliegenden Erfindung liegt die Aufgabe zugrunde, eine Chipkarte mit zumindest einer Transpondereinheit sowie ein Verfahren zu deren Herstellung vorzuschlagen, welches durch die geometrische Ausbildung der Antennenspule eine einfache Anpassung der Antenne an den Transponderchip ermöglicht, ohne dass zusätzliche diskrete Bauteile oder Anpassungen am Transponderchip notwendig wären, wobei die Ausbildung der Antennenspule innerhalb eines limitierten Flächenbereiches der Chipkarte erfolgen soll.

Diese Aufgabe wird durch eine Chipkarte mit den Merkmalen des Anspruchs 1 sowie durch ein Verfahren zur Herstellung dieser Chipkarte mit den Merkmalen des Anspruchs 5 gelöst.

Die asymmetrische Anordnung der Leiterstränge zueinander durch die Ausbildung voneinander verschiedener Windungsabstände ermöglicht in vorteilhafter Weise die vorgenannte Anpassung von Chip und Antenne hinsichtlich Impedanz und einer vorgegebenen Resonanzfrequenz. Verhältnismäßig große Windungsabstände sind in einem Teilflächenbereich des Antennensubstrats realisierbar, welcher in einem Überde-ckungsbereich mit einem Magnetstreifen liegt und in dem weder eine Hochprägung noch Außenkontaktflächen eines Chips angeordnet werden können. Der Windungsabstand eines Leiterstrangs, der in einem relativ schmalen Bereich einer Teilfläche des Antennensubstrats liegt, kann relativ klein sein gegenüber den Windungsabständen von Leitersträngen in anderen Bereichen, in welchen mehr Platz zur Verfügung steht.

In einer besonders vorteilhaften Ausführungsform kann der Leiter aus einem Draht gebildet sein. Die Antenne kann dann durch ein Verlegeverfahren ausgebildet werden, bei dem sich eine einfache Änderung der geometrischen Antennenform im laufenden Produktionsprozess realisieren lässt. Somit ist eine einfache Anpassung der Antenne an verschiedenen Chipserien unterschiedlicher Hersteller möglich.

In einer besonders vorteilhaften Ausführungsform der Chipkarte kann ein Windungsabstand eines dritten Leiterstrangs gegenüber den Windungsabständen eines ersten und zweiten Leiterstrangs verschieden sein.

Auch kann ein Windungsabstand eines vierten Leiterstrangs gegenüber dem Windungsabständen des ersten, zweiten und dritten Leiterstrangs verschieden sein. Die Ausbildung von Leitersträngen mit voneinander verschiedenen Windungsabständen eröffnet eine Vielzahl von geometrischen Kombinationsmöglichkeiten hinsichtlich der Anpassung von Antenne und Chip.

In weiteren vorteilhaften Ausführungsformen der Chipkarte kann ein Leiter der Antenne als Kompensationsschleife über die Leiteranschlussflächen des Chips hinweggeführt sein, wobei ein verbleibendes Drahtende nicht kontaktiert wird, somit offen bleibt und kapazitiv auf die Antennenspule wirkt. Hieraus ergibt sich eine zusätzliche Möglichkeit der Antennenanpassung, wobei die elektrischen Eigenschaften durch den Windungsabstand zum nächstgelegenen Leiter und die Länge des verbleibenden Drahtendes beeinflusst werden können. Auch kann die Anpassung der Antenne durch eine mäanderförmige Verlegung eines Leiters erfolgen.

Weitere vorteilhafte Ausführungsformen des Verfahrens zur Herstellung einer Chipkarte ergeben sich aus den Merkmalsbeschreibungen der auf den Erzeugnisanspruch 1 rückbezogenen Unteransprüche.

Im Folgenden wird die Erfindung unter Bezugnahme auf die beigefügte Zeichnung näher erläutert.

Es zeigen:
- **Fig. 1:**: die Teilflächen einer Chipkarte in einer Draufsicht;
- **Fig. 2:**: eine erste Ausführungsform einer Transpondereinheit einer Chipkarte in einer Draufsicht;
- **Fig. 3:**: eine zweite Ausführungsform einer Transpondereinheit einer Chipkarte in einer Draufsicht.

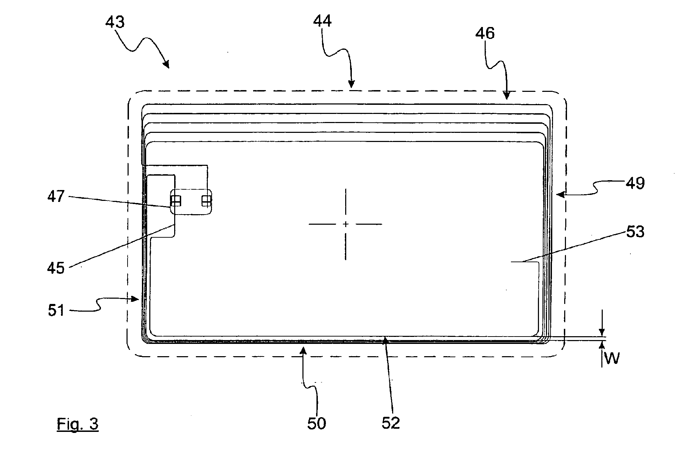

In **Fig. 1** ist eine Chipkarte 10 mit einer Kartenfläche 11 innerhalb einer Kartenkontur 12 dargestellt. Entlang der Kartenkontur 12 weist die Karte 10 eine Randfläche 13 auf, die eine Teilfläche 14 umgibt. In der Teilfläche 14 ist wiederum eine Prägefläche 15 aufgenommen, innerhalb der eine hier nicht dargestellte Hochprägung aufgebracht werden kann, sowie eine Chipfläche 16, innerhalb der ein hier nicht dargestellter Chip platziert werden kann. Die durch die Prägefläche 15 und die Chipfläche 16 definierten Teilflächen sind derart innerhalb der Teilfläche 14 angeordnet, dass miteinander kommunizierende Teilflächenbereiche 19, 20, 21 und 22 der Teilfläche 14 ausgebildet werden. Innerhalb dieser Teilflächenbereiche 19, 20, 21 und 22 sind die in **Fig. 2** und **Fig. 3** dargestellten Antennengeometrien ausbildbar, wohingegen die Prägefläche 15, die Chipfläche 16 und die Randfläche 13 nicht für die Ausbildung einer derartigen Antenne vorgesehen sind.

Die Teilflächenbereiche 19, 20, 21 und 22 sind im Wesentlichen parallel zu Symmetrieachsen 17 und 18 der Chipkarte 10 angeordnet, wobei insbesondere der Teilflächenbereich 19 relativ groß ist gegenüber den Teilflächenbereichen 20, 21 und 22. Auf einer die Teilfläche 14 und die Randfläche 13 teilweise überdeckenden Teilfläche 23, die durch zwei hier gestrichelt dargestellte, parallel zur Symmetrieachse 17 der Chipkarte 10 verlaufende Längsränder 25 und 26 begrenzt wird, ist ein Magnetstreifen 24 angeordnet. Aus den einzelnen Teilflächenbereichen 19, 20, 21 und 22 ergibt sich so ein zusammenhängender Antennenbereich 27, innerhalb dessen Windungen einer Antenne - etwa durch Verlegung eines Drahtleiters- ausgebildet werden können.

**Fig. 2** zeigt eine Chipkarte 54 mit einer Transpondereinheit 28, welche auf einem Antennensubstrat 29 einer Chipkarte 30 angeordnet ist. Die Transpondereinheit 28 weist eine Antenne 31 und ein Chipmodul 32 auf, das zur Kontaktierung eines hier nicht näher dargestellten Chips mit der Antenne 31 über Kontaktflächen 34 verfügt. Hierzu sind Leiterenden 35 der Antenne 31 mit den Kontaktflächen 34 verbunden.

Die Antenne 31 ist aus einem Leiter 36 gebildet, der in Leitersträngen 37, 38, 39 und 40 in voneinander beabstandeten Windungen 41 verlegt ist. Die Leiterstränge 37, 38, 39 und 40 sind in diesem Ausführungsbeispiel jeweils mit unterschiedlichen Windungsabständen W1, W2, W3 und W4 ausgebildet. Die Windungsabstände W1, W2, W3 und W4 sind dabei jeweils voneinander verschieden, wobei insbesondere der Windungsabstand W1 relativ groß ist gegenüber den übrigen Windungsabständen W2, W3 und W4. In den Übergängen zwischen den Leitersträngen 37, 38, 39 und 40 ist der Leiter 36 jeweils als Radius 42 ausgebildet.

Die in der **Fig. 2** dargestellten Leiterstränge 37, 38, 39 und 40 der Antenne 31 erstrecken sich in dem in **Fig. 1** dargestellten Antennenbereich 27. In der Prägefläche 15 und der Teilfläche 23 können entsprechend **Fig. 1** ein Magnetstreifen 24 sowie eine Hochprägung ausgebildet sein.

**Fig. 3** zeigt eine Chipkarte 43 mit einer Transpondereinheit 44. Abweichend von der in **Fig. 2** dargestellten Transpondereinheit 28 ist ein Leiterende 45 einer Antenne 46 über eine Kontaktfläche 47 hinweggeführt. Das Leiterende 45 ist parallel zu Leitersträngen 49, 50 und 51 in einem Windungsabstand W verlegt, wobei das Leiterende 45 als Kompensationsschleife ausgebildet ist, deren Schleifenende 53 in einem rechten Winkel vom Leiterstrang 49 weggeführt ist.

## Patentansprüche

1. Chipkarte (10, 30, 43), insbesondere Wertkarte, Identifikationskarte oder dergleichen, mit zumindest einer Transpondereinheit (28, 44), die zumindest einen Chip (32) und zumindest eine Antenne (31, 46) aufweist, die mit dem Chip verbunden ist, wobei die Antenne aus einem Leiter (36) ausgebildet ist der auf einem Antennensubstrat (29) angeordnet ist und zumindest zwei voneinander beabstandeten Windungen (51) aufweist, wobei die Antenne eine Mehrzahl von Leitersträngen (37, 38, 39, 40, 49, 50, 51) aufweist, die zumindest teilweise achsenparallel zu einer Symmetrieachse der Chipkarte angeordnet sind, wobei die Erstreckung der Antenne auf eine Teilfläche (19, 20, 21, 22) des Antennensubstrats beschränkt ist, wobei die Windungen im Bereich der einzelnen Leiterstränge jeweils äquidistant zueinander angeordnet sind und zumindest ein Leiterstrang gegenüber zumindest einem zweiten parallel verlaufenden Leiterstrang asymmetrisch angeordnet ist, derart, dass Windungsabstände (W1) des ersten Leiterstrangs von Windungsabständen (W2) des zweiten Leiterstrangs verschieden sind, so dass eine resultierende Resonanzfrequenz der Transpondereinheit einer von einer Leseeinheit abgestrahlten Frequenz entspricht, und
dass die Windungsabstände (W1, W2) so ausgebildet sind, dass zwischen der Antenne und dem Chip eine Impedanzanpassung erfolgt.

2. Chipkarte nach Anspruch 1,
**dadurch gekennzeichnet,**
**dass** der Leiter aus einem Draht gebildet ist.

3. Chipkarte nach Anspruch 1 oder 2,
**dadurch gekennzeichnet,**
**dass** ein Windungsabstand (W3) eines dritten Leiterstrangs gegenüber den Windungsabständen (W1, W2) des ersten und zweiten Leiterstrangs verschieden ist.

4. Chipkarte nach Anspruch 3,
**dadurch gekennzeichnet,**
**dass** ein Windungsabstand (W4) eines vierten Leiterstrangs gegenüber den Windungsabständen (W1, W2, W3) des ersten, zweiten und dritten Leiterstrangs verschieden ist.

5. Verfahren zur Herstellung einer Chipkarte (10, 30, 43) mit einer Transpondereinheit (28, 44), die zumindest einen Chip (32) und zumindest eine Antenne (31, 46) aufweist, nach einem der Ansprüche 1 bis 4, wobei in Abhängigkeit von der Kapazität und der Impedanz des Chips eine resultierende Resonanzfrequenz der Transpondereinheit einer von einer Leseeinheit abgestrahlten Frequenz entsprechend ausgebildet wird, wobei die Antenne derart auf einem Substrat (29) angeordnet wird, dass die Windungen im Bereich der einzelnen Leiterstränge jeweils äquidistant zueinander angeordnet sind, und zumindest ein Leiterstrang (37, 38, 39, 40, 49, 50, 51) gegenüber zumindest einem zweiten parallel verlaufenden Leiterstrang asymmetrisch angeordnet ist, derart, dass Windungsabstände (W1) des ersten Leiterstrangs von Windungsabständen (W2) des zweiten Leiterstrangs verschieden sind,
und
dass die Windungsabstände (W1, W2) so ausgebildet werden, dass zwischen der Antenne und dem Chip vermittels der Antenne eine Impedanzanpassung erreicht wird.

## Claims

1. A smartcard (10, 30, 43), particularly an electronic prepayment card, identification card or similar, with at least one transponder unit (28, 44), the transponder unit having at least one chip (32) and at least one antenna (31, 46) connected to the chip, wherein the antenna is made from a conductor (36) that is arranged on an antenna substrate (29) and features at least two windings (51) separated from each other by a distance, wherein the antenna has a plurality of conducting leads (37, 38, 39, 40, 49, 50, 51) which are at least partly arranged so that their axes are parallel to an axis of symmetry of the smartcard, wherein the extension of the antenna is limited to a patch (19, 20, 21, 22) of the antenna substrate, wherein in the region of the individual conducting leads the windings are each arranged so as to be equidistant from each other and at least one conducting lead is arranged asymmetrically with respect to at least one second conducting lead extending parallel thereto, in such a manner that winding distances (W1) of the first conducting lead differ from winding distances (W2) of the second conducting lead, such that a resulting resonance frequency of the transponder unit corresponds to a frequency emitted by a reader unit, and that the winding distances (W1, W2) are embodied in such a manner that impedance matching takes place between the antenna and the chip.

2. The smartcard according to claim 1,
**characterized in that**
the conductor is formed from a wire.

3. The smartcard according to either of claims 1 or 2,
**characterized in that**
a winding distance (W3) of a third conducting lead differs from the winding distances (W1, W2) of the first and second conducting leads.

4. The smartcard according to claim 3,
**characterized in that**
a winding distance (W4) of a fourth conducting lead differs from the winding distances (W1, W2, W3) of the first, second and third conducting leads.

5. A method for producing a smartcard (10, 30, 43) with a transponder unit (28, 44) that has at least one chip (32) and at least one antenna (31, 46) according to any of claims 1 to 4, wherein a resulting resonance frequency of the transponder unit, which is modified depending on the capacitance and impedance of the chip, is designed to match a frequency emitted by a reader unit, wherein the antenna is arranged on a substrate (29) in such a manner that in the region of the individual conducting leads the windings are each arranged so as to be equidistant from each other, and at least one conducting lead (37, 38, 39, 40, 49, 50, 51) is arranged asymmetrically with respect to at least one second conducting lead extending parallel thereto, in such a manner that winding distances (W1) of the first conducting lead differ from winding distances (W2) of the second conducting lead, and that the winding distances (W1, W2) are embodied in such a manner that impedance matching takes place between the antenna and the chip by means of the antenna.

## Revendications

1. Carte à puce (10, 30, 43), en particulier une carte prépayée, une carte d'identification ou similaire, comprenant au moins une unité de transpondeur (28, 44) qui comporte au moins une puce (32) et au moins une antenne (31, 46) raccordée à la puce, l'antenne étant constituée d'un conducteur (36) disposé sur un substrat d'antenne (29) et présentant au moins deux enroulements (51) espacés l'un de l'autre, l'antenne comportant une pluralité de branches conductrices (37, 38, 39, 40, 49, 50, 51) qui sont disposées au moins partiellement parallèlement à un axe de symétrie de la carte à puce, l'extension de l'antenne étant limitée à une surface partielle (19, 20, 21, 22) du substrat d'antenne, les enroulements étant chacun disposés de manière équidistante l'un par rapport à l'autre dans la région des branches conductrices individuelles, et au moins une branche conductrice étant disposée asymétriquement par rapport à au moins une seconde branche conductrice qui s'étend parallèlement, de telle sorte que les distances entre les enroulements (W1) de la première branche conductrice diffèrent des distances entre les enroulements (W2) de la seconde branche conductrice, de telle sorte qu'une fréquence de résonance résultante de l'unité de transpondeur corresponde à une fréquence émise par une unité de lecteur, et les distances entre les enroulements (W1, W2) sont conçues de telle façon qu'un réglage de l'impédance soit effectué entre l'antenne et la puce.

2. Carte à puce selon la revendication 1,
**caractérisée en ce que**
le conducteur est formé d'un fil métallique.

3. Carte à puce selon l'une des revendications 1 ou 2,
**caractérisée en ce qu'**
une distance entre les enroulements (W1) d'une troisième branche conductrice diffère par rapport aux distances entre les enroulements (W1, W2) de la première et la seconde branche conductrice.

4. Carte à puce selon la revendication 3,
**caractérisée en ce qu'**
une distance entre les enroulements (W4) d'une quatrième branche conductrice diffère par rapport aux distances entre les enroulements (W1, W2, W3) de la première, seconde et troisième branche conductrice.

5. Procédé pour la fabrication d'une carte à puce (10, 30, 43) ayant une unité de transpondeur (28, 44) comprenant au moins une puce (32) und au moins une antenne (31, 46) selon l'une des revendications 1 à 4, une fréquence de résonance résultante de l'unité de transpondeur étant formée conformément à une fréquence émise par une unité de lecteur en fonction de la capacité et l'impédance de la puce, l'antenne étant disposée sur un substrat (29) de telle sorte que les enroulements soient chacun disposés de manière équidistante l'un par rapport à l'autre dans la région des branches conductrices individuelles, et au moins une branche conductrice (37, 38, 39, 40, 49, 50, 51) étant disposée asymétriquement par rapport à au moins une seconde branche conductrice qui s'étend parallèlement, de telle sorte que les distances entre les enroulements (W1) de la première branche conductrice diffèrent des distances entre les enroulements (W2) de la seconde branche conductrice, et
les distances entre les enroulements (W1, W2) sont conçues de telle façon qu'un réglage de l'impédance soit effectué entre l'antenne et la puce par l'intermédiaire de l'antenne.
